# EUROPEAN PATENT APPLICATION

(11) **EP 3 508 592 A1**
(43) Date of publication of application: **10.07.2019**
(21) Application number: 17846190.1
(22) Date of filing: 21.08.2017
(51) Int. Cl.: C22B 59/00, C22B 1/02, C22B 3/26, C22B 3/42, C22B 3/44

(54) **METHOD FOR RECOVERING SCANDIUM**

(30) Priority: 30.08.2016 JP 2016168479
(71) Applicant: Sumitomo Metal Mining Co., Ltd., Tokyo 105-8716 (JP)
(72) Inventor: HIGAKI Tatsuya, Niihama-shi Ehime 792-0002 (JP); IMAMURA Masaki, Tokyo 105-8716 (JP); NAKAI Osamu, Tokyo 105-8716 (JP); KOBAYASHI Hiroshi, Niihama-shi Ehime 792-0002 (JP)
(74) Representative: Jones, Nicholas Andrew
(86) International application number: PCT/JP2017/029813
(87) International publication number: WO 2018/043183

(57) **Abstract**

Provided is a method for recovering scandium as scandium oxide that contains high-quality scandium and in which coarse particles having good handling properties are formed. This method for recovering scandium includes a step for carrying out an oxalate conversion process wherein oxalic acid is used in a solution containing scandium (scandium-containing solution) to generate a reaction in which the scandium is converted into an oxalate form, the method characterized in that the temperature of the reaction solution during the oxalate conversion process is 50°C to 80°C.

## Description

### TECHNICAL FIELD

The present invention relates to a method for recovering scandium. Specifically, the present invention relates to a method for recovering scandium in the form of scandium oxide by subjecting a solution containing scandium to an oxalate conversion treatment and roasting scandium oxalate thus obtained.

### BACKGROUND ART

In recent years, the high pressure acid leaching (HPAL) process has been emerging as a practical method, in which nickel oxide ore is introduced into a pressurized vessel together with sulfuric acid, subjected to a leaching treatment by being heated at a high temperature of about 240°C to 260°C, and thus separated into a leachate containing nickel and a leach residue.

In the case of using the HPAL process, scandium contained in the nickel oxide ore is contained in the leachate together with nickel (see, for example, Patent Document 1). Moreover, it is possible to effectively separate nickel and scandium from each other since scandium remains in the acidic solution after addition of sulfurizing agent while nickel in the solution is recovered as nickel sulfide when a neutralizing agent is added to the leachate obtained to separate impurities and then a sulfurizing agent is added to the remaining leachate to cause a sulfuration reaction. Note that the nickel sulfide obtained by the sulfuration reaction can be treated by an existing nickel refinement process to obtain electric nickel or a compound of a nickel salt.

Here, there is a method for recovering scandium from the acidic solution after addition of sulfurizing agent described above as scandium oxide by, for example, an ion exchange (IX) method, a solvent extraction method, an oxalate conversion and precipitation method, and a roasting method. Scandium is extremely useful as an additive for a high strength alloy and an electrode material for a fuel cell, is expected to be widely used in various fields in the future, and is thus required to be efficiently recovered.

As the properties required to scandium oxide, the content is regarded as important and high purification is one trend. Moreover, in recent years, coarse scandium oxide particles rather than fine particles which are likely to scatter have become desired from the viewpoint of handling. However, mere coarsening of particles leads to an increase in the content of impurities.

Patent Document 1: Japanese Unexamined Patent Application, Publication No. 2014-218719

### DISCLOSURE OF THE INVENTION

### Problems to be Solved by the Invention

The present invention is made in view of the above actual circumstances. An object of the present invention is to provide a method for recovering scandium as scandium oxide which contains scandium at a high content and is in the form of coarse particles having favorable handling property.

### Means for Solving the Problems

The present inventors have conducted extensive studies to solve the aforementioned problems. As a result, the present inventors have found out that it is possible to promote the crystal growth of scandium oxalate to be obtained by adjusting the temperature of the reaction solution during the treatment to a predetermined range when generating scandium oxalate by subjecting a scandium-containing solution to an oxalate conversion treatment. Then the present invention has been completed.
(1) A first embodiment of the present invention provides a method for recovering scandium, including: a step for carrying out an oxalate conversion treatment in which oxalic acid is used in a solution containing scandium (scandium-containing solution) to cause a reaction in which the scandium is converted into an oxalate form, in which a temperature of a reaction solution during the treatment is set to 50°C or more and 80°C or less upon the oxalate conversion treatment.
(2) A second embodiment of the present invention provides the method for recovering scandium according to the first embodiment, in which scandium oxalate is obtained by the oxalate conversion treatment and the scandium oxalate is roasted to generate scandium oxide.
(3) A third embodiment of the present invention provides the method for recovering scandium according to the first or second embodiment, in which an oxalic acid solution having a temperature adjusted to 50°C or more and 80°C or less is used as the oxalic acid.
(4) A fourth embodiment of the present invention provides the method for recovering scandium according to any one of the first to third embodiments, in which the scandium-containing solution is obtained by subjecting a solution containing scandium to an ion exchange treatment and/or a solvent extraction treatment.

### Effects of the Invention

According to the present invention, it is possible to recover scandium which contains scandium at a high content and is in the form of coarse particles having favorable handling property.

### BRIEF DESCRIPTION OF THE DRAWINGS

Fig. 1 is a flow diagram for illustrating the flow of a hydrometallurgy process of nickel oxide ore.
Fig. 2 is a flow diagram for illustrating the flow of an ion exchange treatment of a post-sulfuration liquid and a solvent extraction treatment of a scandium eluate.
Fig. 3 is a flow diagram for illustrating the flow of an oxalate conversion treatment.

### PREFERRED MODE FOR CARRYING OUT THE INVENTION

Below, specific embodiments of the present invention (hereinafter referred to as the "present embodiments") will be described in more detail with reference to the drawings. Note that the present invention shall not be limited to the following embodiments and can be implemented with appropriate modifications made without departing from the spirit of the present invention. In addition, in the present specification, the notation "X to Y" (X and Y are arbitrary numerical values) means "X or more and Y or less".

### <<1. Overview>>

The method for recovering scandium according to the present embodiment is a method for recovering scandium from an acidic solution containing scandium and an impurity component.

Specifically, this method for recovering scandium is a method which includes a step for carrying out an oxalate conversion treatment in which oxalic acid is used in a solution containing scandium and an impurity component (hereinafter also referred to as the "scandium-containing solution") to cause a reaction in which the scandium is converted into an oxalate form. Note that, for example, scandium oxalate to be obtained by performing such an oxalate conversion treatment can be converted into the form of scandium oxide by being roasted.

Here, as the scandium-containing solution to be subjected to the oxalate conversion treatment, a solution obtained by subjecting a leachate obtained by the high pressure acid leaching (HPAL) treatment of nickel oxide ore to a sulfuration treatment to separate nickel therefrom and subjecting the post-sulfuration liquid thus obtained to an ion exchange treatment and/or a solvent extraction treatment to separate impurities therefrom and enrich scandium therein can be used. Note that scandium can be left in the solution while nickel is converted into a sulfide by a sulfuration treatment in the HPAL process and nickel and scandium can be thus effectively separated from each other.

In the present embodiment, the temperature of the reaction solution during the treatment is adjusted to a predetermined range upon such an oxalate conversion treatment of a scandium-containing solution using oxalic acid. This makes it possible to promote the crystal growth of scandium oxalate to be obtained and to obtain scandium oxalate having a large particle diameter. Moreover, for example, by roasting the scandium oxalate obtained, it is possible to obtain scandium oxide coarsened to a desired particle diameter and to improve the handling property as well as it is possible to obtain scandium oxide containing scandium at a high content.

### <<2. Method for recovering scandium>>

Each step of the method for recovering scandium according to the present embodiment will be specifically described with reference to the drawings.

### <2-1. Hydrometallurgy process of nickel oxide ore>

In the method for recovering scandium according to the present embodiment, as described above, a solution obtained by separating nickel from a leachate obtained by the high pressure acid leaching (HPAL) treatment of nickel oxide ore as a sulfide and subjecting the solution thus obtained to an ion exchange treatment and a solvent extraction treatment to remove impurity components therefrom can be used as the solution containing scandium and impurity components such as iron (scandium-containing solution). Below, the hydrometallurgy process of nickel oxide ore for obtaining a scandium-containing solution to be a starting material will be described first.

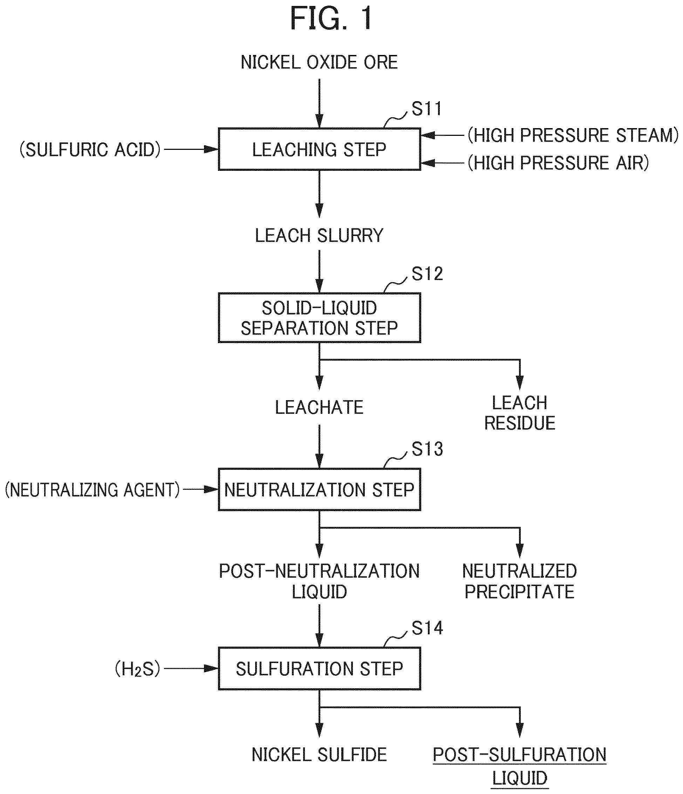

Fig. 1 is a flow diagram for illustrating the flow of a hydrometallurgy process of nickel oxide ore. As illustrated in Fig. 1, the hydrometallurgy process of nickel oxide ore includes a leaching step S11 of leaching nickel oxide ore with sulfuric acid under high temperature and high pressure to obtain a leach slurry; a solid-liquid separation step S12 of performing solid-liquid separation to separate the leach slurry into a leachate and a leach residue; a neutralization step S13 of adding a neutralizing agent to the leachate to obtain a neutralized precipitate containing impurities and a post-neutralization liquid; and a sulfuration step S14 of adding a sulfurizing agent to the post-neutralization liquid to obtain nickel sulfide and a post-sulfuration liquid.

### (1) Leaching step

The leaching step S11 is a step for adding sulfuric acid to a slurry of nickel oxide ore, for example, in a high temperature pressurized vessel (an autoclave) and the like, supplying high pressure steam and high pressure air into the vessel, and stirring the slurry at a temperature of 240°C to 260°C to generate a leach slurry containing a leachate containing nickel and a leach residue containing hematite. Note that scandium is contained in the leachate together with nickel.

Here, examples of nickel oxide ore mainly include so-called laterite ore such as limonite ore and saprolite ore. The content of nickel in laterite ore is usually 0.8 to 2.5 wt%, and nickel is contained as a hydroxide or a silica magnesia (magnesium silicate) mineral. In addition, these types of nickel oxide ore contain scandium.

### (2) Solid-liquid separation step

The solid-liquid separation step S12 is a step for performing solid-liquid separation of the leach slurry generated in the leaching step S11 described above into a leachate containing nickel and cobalt and the leach residue of hematite by multi-stage washing.

In this solid-liquid separation step S12, the leach slurry is mixed with a washing liquid, and then solid-liquid separation is performed by using a solid-liquid separation apparatus such as a thickener. Specifically, the leach slurry is first diluted with the washing liquid, and then the leach residue in the slurry is condensed as a precipitate in the thickener. This makes it possible to decrease the amount of nickel attached to the leach residue according to the degree of dilution. In actual operation, thickeners having such a function are used by being connected in multiple stages.

### (3) Neutralization step

The neutralization step S13 is a step for adding a neutralizing agent to the leachate to adjust the pH, thereby obtaining a neutralized precipitate containing impurity elements and a post-neutralization liquid. By the neutralization treatment in this neutralization step S13, valuable metals such as nickel, cobalt, and scandium are contained in the post-neutralization liquid while most impurities including aluminum are contained in the neutralized precipitate.

In the neutralization step S13, publicly known substances can be used as the neutralizing agent and examples thereof may include limestone, slaked lime, and sodium hydroxide. In addition, in the neutralization treatment, the pH is preferably adjusted to the range of 1 to 4 and more preferably to the range of 1.5 to 2.5 while suppressing oxidation of the leachate separated. When the pH is less than 1, neutralization may be insufficient, and the neutralized precipitate and the post-neutralization liquid may not be separated. Meanwhile, when the pH is more than 4, not only impurities including aluminum but also valuable metals such as scandium and nickel may be contained in the neutralized precipitate.

### (4) Sulfuration step

The sulfuration step S14 is a step for adding a sulfurizing agent to the post-neutralization liquid obtained in the neutralization step S13 described above to obtain nickel sulfide and a post-sulfuration liquid. Nickel, cobalt, zinc, and the like are recovered as sulfides and scandium and the like remain in the post-sulfuration liquid by the sulfuration treatment in this sulfuration step S14. Hence, nickel and scandium can be effectively separated from each other by the sulfuration treatment in this hydrometallurgy process of nickel oxide ore.

Specifically, in the sulfuration step S14, a sulfurizing agent such as gaseous hydrogen sulfide, sodium sulfide, or hydrogenated sodium sulfide is blown into the post-neutralization liquid obtained to generate a sulfide containing nickel (nickel sulfide) with less impurity components and a post-sulfuration liquid which has a low and stabilized level of nickel concentration and contains scandium and the like.

In the sulfuration treatment of the sulfuration step S14, the separation treatment of a slurry of nickel sulfide is performed using a sedimentation apparatus such as a thickener to separate and recover nickel sulfide from the bottom of the thickener. Meanwhile, the post-sulfuration liquid of an aqueous solution component is allowed to overflow for recovery.

In the method for recovering scandium according to the present embodiment, for example, a solution (solution containing scandium and an impurity component) obtained by recovering the post-sulfuration liquid of an acidic solution of sulfuric acid obtained through each step in the hydrometallurgy process of nickel oxide ore as described above and subjecting the post-sulfuration liquid to an ion exchange treatment and a solvent extraction treatment to be described later can be used as a starting material, and scandium oxide is generated from this solution.

### <2-2. Ion exchange treatment and solvent extraction treatment>

In the method for recovering scandium according to the present embodiment, as described above, a solution obtained by subjecting the post-sulfuration liquid obtained through the sulfuration step in the hydrometallurgy process of nickel oxide ore to an ion exchange treatment and a solvent extraction treatment can be used as the scandium-containing solution. It is possible to separate and remove impurities in the solution and enrich scandium by subjecting the post-sulfuration liquid to an ion exchange treatment and/or a solvent extraction treatment in this way. Below, each of the ion exchange treatment and the solvent extraction treatment will be described. Note that the solvent extraction treatment is described by taking an aspect in which an eluate obtained through the ion exchange treatment is subjected to the solvent extraction treatment as an example, but only the solvent extraction treatment may be performed without performing the ion exchange treatment.

### (1) Ion exchange treatment

The post-sulfuration liquid contains aluminum, chromium, and the like as impurities. Accordingly, it is preferable to remove these impurities and to enrich scandium when recovering scandium in the solution as scandium oxide. Examples of the method for enriching scandium may include a method by an ion exchange treatment using a chelating resin.

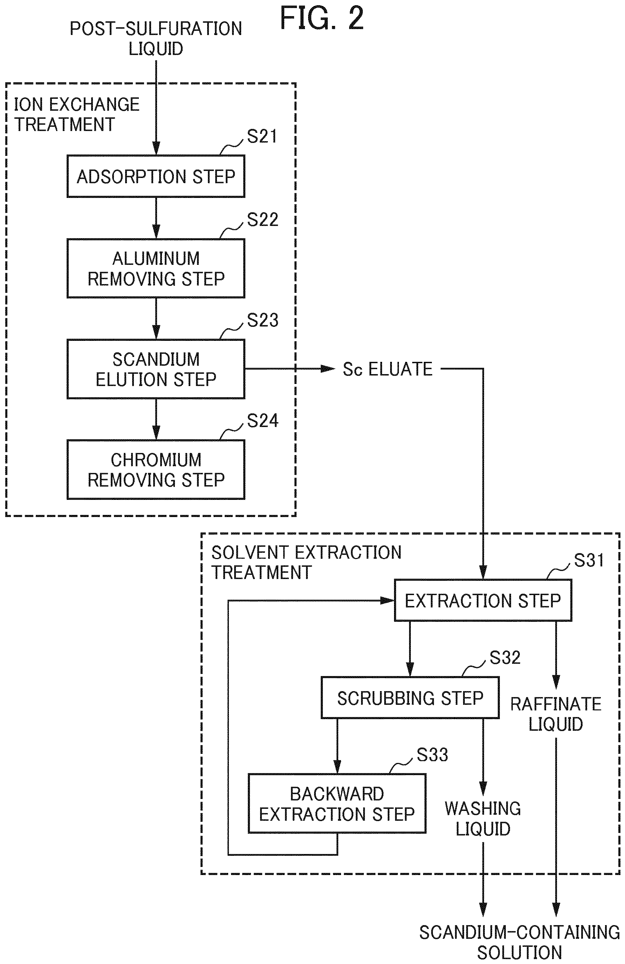

Fig. 2 is a flow diagram for illustrating an example of the flow of an ion exchange treatment performed by an ion exchange reaction using a chelating resin. Note that the flow until the scandium eluate obtained by the ion exchange treatment is subjected to the solvent extraction treatment is also illustrated in this Fig. 2. In the ion exchange treatment of which an example is illustrated in Fig. 2, the post-sulfuration liquid obtained through the sulfuration step S14 (Fig. 1) in the hydrometallurgy process of nickel oxide ore is brought into contact with a chelating resin to adsorb scandium in the post-sulfuration liquid onto the chelating resin and to obtain a scandium (Sc) eluate.

There is no particular limitation for the aspect (each step) of the ion exchange treatment, but as illustrated in Fig. 2, examples of the ion exchange treatment may include a treatment including: an adsorption step S21 of bringing the post-sulfuration liquid into contact with a chelating resin to adsorb scandium onto the chelating resin; an aluminum removing step S22 of bringing sulfuric acid into contact with the chelating resin to remove aluminum adsorbed on the chelating resin; a scandium elution step S23 of bringing sulfuric acid into contact with the chelating resin which has been subjected to the aluminum removing step S22 to obtain a scandium eluate; and a chromium removing step S24 of bringing sulfuric acid into contact with the chelating resin which has been subjected to the scandium elution step S23 to remove chromium which has been adsorbed onto the chelating resin in the adsorption step S21. Below, an overview of each step will be described.

### [Adsorption step]

In the adsorption step S21, the post-sulfuration liquid is brought into contact with a chelating resin to adsorb scandium onto the chelating resin. There is no particular limitation for the kind of the chelating resin, and for example, a resin having iminodiacetic acid as a functional group can be used.

### [Aluminum removing step]

In the aluminum removing step S22, 0.1 N or less of sulfuric acid is brought into contact with the chelating resin which has adsorbed scandium in the adsorption step S21 to remove aluminum adsorbed on the chelating resin. Note that when removing aluminum, the pH is preferably maintained in the range of between 1 or more and 2.5 or less and more preferably maintained in the range of between 1.5 or more and 2.0 or less.

### [Scandium elution step]

In the scandium elution step S23, 0.3 N or more and less than 3 N of sulfuric acid is brought into contact with the chelating resin which has been subjected to the aluminum removing step S22 to obtain a scandium eluate. When obtaining the scandium eluate, the normality of sulfuric acid used as an eluent is preferably maintained in the range of between 0.3 N or more and less than 3 N, and more preferably maintained in the range of between 0.5 N or more and less than 2 N.

### [Chromium removing step]

In the chromium removing step S24, 3 N or more of sulfuric acid is brought into contact with the chelating resin which has been subjected to the scandium elution step S23 to remove chromium adsorbed on the chelating resin. It is not preferable that the normality of sulfuric acid used as an eluent is less than 3 N when removing chromium since chromium is not properly removed from the chelating resin.

By such an ion exchange treatment, it is possible to obtain a scandium eluate from which impurities such as aluminum and chromium have been removed and in which scandium is enriched. Note that it is possible to increase the concentration of the scandium eluate by repeatedly subjecting the scandium eluate obtained to the same ion exchange treatment. The concentration of scandium to be recovered increases as the number of repetitions increases, but the number of repetitions is industrially preferably about 8 times or less since the degree of increase in the concentration of scandium to be recovered decreases even when the ion exchange treatment is repeated too many times.

### (2) Solvent extraction treatment

In the solvent extraction treatment, the scandium (Sc) eluate obtained through the ion exchange treatment described above is brought into contact with a predetermined extractant to extract scandium.

Here, there is no particular limitation for the extractant to be used in the solvent extraction, and an amine-based extractant, a phosphoric acid-based extractant, and the like can be used. In addition, according to the extractant, it is possible to extract scandium of a target for extraction into the organic solvent containing the extractant or it is also possible to selectively extract impurity components into the extractant and to leave scandium in the raffinate liquid. For example, in the case of using an amine-based extractant, impurity components are selectively extracted into the organic solvent and scandium is contained and enriched in the raffinate liquid since an amine-based extractant is an extractant having low selectivity for scandium.

There is no particular limitation for the aspect (each step) of the solvent extraction treatment, but examples thereof may include a treatment including: an extraction step S31 of mixing the scandium eluate with an extractant and separating the mixture into a post-extraction organic solvent into which impurities have been extracted and a raffinate liquid containing scandium; a scrubbing step S32 of mixing the post-extraction organic solvent with a hydrochloric acid solution or a sulfuric acid solution to separate scandium which is contained in the post-extraction organic solvent in a trace amount; and a backward extraction step S33 of mixing the post-washing organic solvent with a backward extraction starting liquid to perform backward extraction of impurities from the post-washing organic solvent and to obtain a backward extraction liquid. By performing the solvent extraction treatment in this way, it is possible to further increase the purity of scandium contained in the scandium eluate.

### [Extraction step]

In the extraction step S31, a scandium-containing solution is mixed with an organic solvent containing an extractant and impurities are selectively extracted into the organic solvent to obtain an organic solvent containing the impurities and a raffinate liquid in which scandium is enriched.

As the extractant, for example, an amine-based extractant is used. As the amine-based extractant, it is possible to use amine-based extractants known under trade names of PrimeneJM-T which is a primary amine, LA-1 which is a secondary amine, tri-n-octylamine (TNOA) and tri-i-octylamine (TIOA) which are a tertiary amine.

At the time of extraction, it is preferable that the extractant such as an amine-based extractant is diluted with, for example, a hydrocarbon-based organic solvent and used. There is no particular limitation for the concentration of extractant in the organic solvent, but it is preferably about 1 vol% or more and 10 vol% or less and particularly preferably about 5 vol% in consideration of phase separation property at the time of extraction and at the time of backward extraction to be described later. In addition, there is no particular limitation for the volume proportion of the organic solvent to the scandium-containing solution at the time of extraction, but it is preferable to set the molar quantity of the organic solvent to about 0.01 times or more and 0.1 times or less the molar quantity of metals in the scandium-containing solution.

### [Scrubbing (washing) step]

In the extraction step S31 described above, in a case in which scandium slightly coexists in the organic solvent into which impurities have been extracted from the scandium-containing solution, it is preferable to subject the organic solvent (organic phase) to a scrubbing (washing) treatment to separate scandium into the aqueous phase and to recover the scandium from the extractant prior to the backward extraction of the extraction liquid obtained in the extraction step S31 (scrubbing step S32). By providing the scrubbing step S32 and thus washing the organic solvent and separating a small amount of scandium extracted by the extractant in this way, it is possible to separate scandium into the washing liquid and to further increase the recovery rate of scandium.

As a solution (washing solution) to be used in scrubbing, a sulfuric acid solution, a hydrochloric acid solution, and the like can be used. It is also possible to use one into which a water-soluble chloride or sulfate is added. Specifically, when a sulfuric acid solution is used as the washing solution, it is preferable to use one having a concentration in the range of between 1.0 mol/L or more and 3.0 mol/L or less.

The number of washing stages (number of washings) also depends on the kind and concentration of impurity elements and it can be thus appropriately changed depending on the respective extractants and the extraction conditions. For example, in a case in which the phase ratio O/A of the organic phase (O) to the aqueous phase (A) is set to 1, it is possible to separate scandium extracted into the organic solvent down to a value less than the lower limit value detected by the analyzer by setting the number of stages to about 3 to 5 stages.

### [Backward extraction step]

In the backward extraction step S33, the impurities are backward-extracted from the organic solvent into which the impurities have been extracted in the extraction step S31. Specifically, in this backward extraction step S33, the backward extraction solution (the backward extraction starting liquid) is added to and mixed with an organic solvent containing an extractant to cause a reaction opposite to that for the extraction treatment in the extraction step S31 and thus to backward-extract the impurities and to obtain a post-backward extraction liquid containing the impurities.

From the viewpoint of suppressing excessive use, it is preferable that the concentration of the solution containing a carbonate of the backward extraction solution is, for example, about 0.5 mol/L or more and 2 mol/L or less.

Note that the backward extraction treatment can be performed in the same manner by adding the backward extraction solution to the extractant after scrubbing and mixing these together in a case in which the organic solvent containing an extractant has been subjected to the scrubbing treatment in the scrubbing step S32 described above.

The extractant obtained by adding a solution of a carbonate such as sodium carbonate to the extractant after extraction or the extractant after scrubbing, performing the backward extraction treatment, and thus separating the impurities from the extractant in this way can be repeatedly used as an extractant to be used in the extraction treatment in the extraction step S31.

### <2-3. Oxalate conversion treatment>

The scandium-containing solution, which is a backward extract obtained through the solvent extraction treatment described above, is subjected to an oxalate conversion treatment to convert scandium into an oxalate salt (scandium oxalate). By converting scandium into an oxalate salt in this way, it is possible to improve handling properties such as filterability and to efficiently recover scandium.

As a method of oxalate conversion treatment, it is possible to use a method in which oxalic acid is added to the scandium-containing solution to generate and precipitate a solid crystal of scandium oxalate based on scandium in the scandium-containing solution. The oxalic acid to be used may be a solid or a solution. Note that, in this method of oxalate conversion treatment, it is preferable to subject the scandium-containing solution to an oxidation treatment by adding an oxidizing agent to the scandium-containing solution and thus controlling the oxidation-reduction potential (ORP, reference electrode: silver/silver chloride) to be in the range of about 500 mV to 600 mV prior to the oxalate conversion treatment in order to prevent precipitation of iron(II) oxalate in a case in which divalent iron ions are contained in the scandium-containing solution as an impurity component.

Alternatively, as a method of oxalate conversion treatment, it is possible to use a method in which a scandium-containing solution is gradually added into an oxalic acid solution filled in a reaction vessel to generate and precipitate a solid crystal of scandium oxalate. At this time, it is preferable to adjust the pH of the scandium-containing solution to a range of between -0.5 or more and 1 or less prior to the oxalate conversion treatment. According to such a method of oxalate conversion treatment, it is possible to prevent precipitation of iron(II) oxalate and the like and it is also possible to recover scandium having a higher purity without using an expensive oxidizing agent and the like.

Here, in the method for recovering scandium according to the present embodiment, the temperature of the reaction solution during the treatment is adjusted to the range of between 50°C or more and 80°C or less upon the oxalate conversion treatment described above. In addition, the temperature of the solution is adjusted preferably to the range of between 55°C or more and 70°C or less and more preferably to 60°C.

It is possible to increase the size of the particles of scandium oxalate to be generated by adjusting the temperature of the reaction solution containing the scandium-containing solution and oxalic acid to a predetermined range upon the oxalate conversion treatment in this way. Moreover, by roasting the scandium oxalate obtained, it is possible to obtain scandium oxide which contains scandium at a high content and is effectively coarsened to a desired size and to improve the handling property.

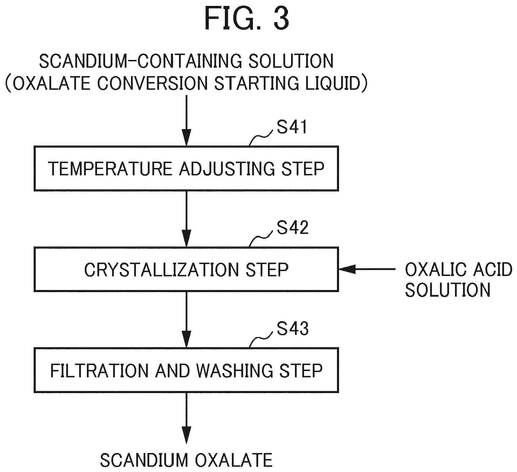

The flow diagram for an oxalate conversion treatment in the present embodiment is illustrated in Fig. 3. As described above, in the present embodiment, the oxalate conversion treatment includes a temperature adjusting step S41 of adjusting the temperature of the scandium-containing solution to a specific temperature range, namely, the range of between 50°C or more and 80°C or less and a crystallization step S42 of subjecting the solution (oxalate conversion starting liquid) having a temperature adjusted to an oxalate conversion treatment using oxalic acid to cause precipitation of an oxalate of scandium. Note that the crystals of scandium oxalate obtained are recovered through a filtration and washing step S43 to perform a filtration and washing treatment.

### (Temperature adjusting step)

In the temperature adjusting step S41, the temperature of the scandium-containing solution to be subjected to the oxalate conversion treatment is adjusted to the range of between 50°C or more and 80°C or less, preferably to the range of between 55°C or more and 70°C or less, and more preferably to 60°C. By adjusting the temperature of the scandium-containing solution to 50°C or more and causing a reaction in the next crystallization step S42 while maintaining the temperature in this way, it is possible to accelerate the crystal growth of an oxalate of scandium to be generated and to coarsen the particles.

There is no particular limitation for the method for adjusting the temperature of the scandium-containing solution, and for example, the temperature can be adjusted by using a heater and the like.

### (Crystallization step)

In the crystallization step S42, an oxalate conversion treatment in which oxalic acid is used in the scandium-containing solution (oxalate conversion starting liquid), of which the temperature has been adjusted to and maintained in the range of between 50°C or more and 80°C or less is carried out to cause a reaction in which the scandium is converted into an oxalate form, and an oxalate of scandium (crystal of scandium oxalate) is obtained. In the present embodiment, the reaction of oxalate conversion is caused by putting the temperature of the reaction solution during the treatment in a state of between 50°C or more and 80°C or less in this way. This makes it possible to accelerate the crystal growth of scandium oxalate and to coarsen the particles.

When the temperature of the reaction solution during the treatment is less than 50°C, the crystal growth slows down and the particles do not sufficiently grow to particles having favorable handling property and cannot be thus coarsened. On the other hand, it is inefficient that the temperature of the reaction solution during the treatment exceeds 80°C since the particles cannot be coarsened any more but rather the required energy cost, facility cost, and the like increase.

In the oxalate conversion treatment, the oxalic acid to be used may be a solid or a solution (oxalic acid solution). In addition, an oxalic acid solution may be added to the scandium-containing solution to generate crystals of scandium oxalate or an oxalic acid solution may be placed in a reaction vessel and the scandium-containing solution may be added thereto to generate crystals as described above.

In the case of using an aqueous solution of oxalic acid (oxalic acid solution) in the oxalate conversion treatment, it is preferable to use a solution of which the temperature has been adjusted to the range of between 50°C or more and 80°C or less in the same manner as the scandium-containing solution. By an oxalic acid solution having a temperature adjusted in this way, it is possible to reliably maintain the temperature of the reaction solution during the oxalate conversion treatment at 50°C or more and 80°C or less, to more efficiently generate crystals of scandium oxalate sufficiently grown, and to recover scandium oxide coarsened to a desired size.

In addition, it is preferable to use oxalic acid in an amount to be in the range of 1.05 times to 1.2 times the equivalent amount required to precipitate scandium in the scandium-containing solution as an oxalate. When the amount of oxalic acid used is less than 1.05 times the equivalent amount required, there is a possibility that the entire amount of scandium cannot be effectively recovered. On the other hand, it is not preferable that the amount of oxalic acid used exceeds 1.2 times the equivalent amount required since scandium is redissolved and the recovery rate thereof decreases by an increase in the solubility of scandium oxalate and the amount of oxidizing agent such as sodium hypochlorite used increases in order to decompose excessive oxalic acid.

In addition, in the case of using an oxalic acid solution, it is preferable to use a solution of which the pH has been adjusted to the range of between -0.5 or more and 1 or less. Particularly, in the case of using the scandium-containing solution of which the pH has been adjusted to the range of between -0.5 or more and 1 or less, it is possible to lower the content of impurities and to recover high purity scandium by adjusting the pH of the oxalic acid solution also to the same range.

Note that an aspect in which the temperature of the scandium-containing solution has been previously adjusted to a temperature of 50°C or more and 80°C or less, and the temperature of the reaction solution during the treatment is set to 50°C or more and 80°C or less while maintaining this temperature of the scandium-containing solution has been described in the example described above, but the present invention is not limited thereto, and it is only required that the temperature of the reaction solution when the scandium-containing solution is mixed with oxalic acid and a reaction is thus caused is maintained in the range of between 50°C or more and 80°C or less.

### <2-4. Generation of scandium oxide (roasting)>

In the present embodiment, the crystals of scandium oxalate obtained by performing the oxalate conversion treatment as described above are converted into scandium oxide by roasting.

The roasting treatment is a treatment in which the crystals of scandium oxalate obtained by the oxalate conversion treatment are washed with water, dried, and then roasted. It is possible to recover scandium as scandium oxide through this roasting treatment. Particularly, in the present embodiment, it is possible to lower the content of impurities in scandium oxalate to be generated and to grow the crystals to a desired size since the temperature of the reaction solution during the treatment is adjusted to and maintained in a predetermined range in the oxalate conversion treatment described above. Moreover, this makes it possible to effectively coarsen the particle diameter of scandium oxide to be obtained through roasting. Hence, it is possible to obtain scandium oxide which contains scandium at a high content and has improved handling property.

There is no particular limitation for the conditions of the roasting treatment, but for example, scandium oxalate may be placed in a tubular furnace and heated at about 900°C for about 2 hours. Note that a continuous furnace such as a rotary kiln is preferably used for industrial production since both drying and roasting can be performed by using the same equipment.

### EXAMPLES

Below, the present invention will be described in more detail with reference to Examples and Comparative Examples. Note that the present invention shall not in any sense be limited to these Examples.

### [Example 1]

### (Hydrometallurgy process of nickel oxide ore)

Nickel oxide ore was leached with sulfuric acid by using an autoclave, and slaked lime was added to the leachate obtained to neutralize the leachate. Subsequently, a sulfurizing agent was added to the post-neutralization liquid obtained to cause a sulfuration reaction, nickel, cobalt and the like were separated from the post-neutralization liquid as sulfides, and a post-sulfuration liquid containing scandium was obtained.

### (Ion exchange treatment and neutralization treatment)

Next, the post-sulfuration liquid obtained was subjected to an ion exchange treatment using a chelating resin and thus an eluate (scandium eluate) containing scandium eluted from the chelating resin was obtained as well as impurities in the solution were separated. Thereafter, a neutralizing agent was added to the scandium eluate to generate a precipitate of scandium hydroxide.

### (Solvent extraction treatment)

Next, sulfuric acid was added to the precipitate of scandium hydroxide and the precipitate was redissolved to obtain a solution (scandium solution), this scandium solution was subjected to a solvent extraction treatment using an amine-based extractant, and thus a scandium sulfate solution was obtained as a raffinate liquid.

### (Oxalate conversion treatment)

Next, the scandium sulfate solution was diluted by adding water to the scandium sulfate solution so that the scandium concentration contained in the solution was about 5 g/L. In addition, at the time of dilution, the pH of the solution was adjusted to and maintained at around 1 by adding sulfuric acid thereto. Note that there was no difference in the particle diameter of the purified products to be obtained in the pH range of about 0 to 1.

Subsequently, hydrogen peroxide was added to the scandium sulfate solution after pH adjustment, and the oxidation-reduction potential (ORP) of this solution was adjusted to the range of 500 mV to 600 mV as a value measured using silver/silver chloride as a reference electrode, thereby obtaining an oxalate conversion starting liquid.

Subsequently, the oxalate conversion starting liquid was taken by 1.3 liters per one test condition. In addition, as an oxalic acid solution to be used in the oxalate conversion, a solution containing oxalic acid at a concentration of 100 g/L was prepared by 0.54 liters per one test condition. Note that the amount of this oxalic acid solution corresponds to the amount of oxalic acid added to be 2.7 equivalence of scandium contained in the oxalate conversion starting liquid.

Thereafter, the temperatures of the oxalate conversion starting liquid and the oxalic acid solution were each raised to and maintained at 60°C, and the oxalate conversion starting liquid was added into the oxalic acid solution contained in the reaction vessel at a flow rate of about 0.5 L/min while stirring the oxalic acid solution. Note that the temperature of the reaction solution during the treatment was maintained at 60°C. The conditions of the oxalate conversion treatment are summarized in the following Table 1.

**[Table 1]**

| | Oxalate conversion starting liquid (Value measured at room temperature) | | Oxalic acid solution | | Temper ature [°C] | Retention time [hr] |
|---|---|---|---|---|---|---|
| | Sc [g/L] | pH | Concentration [g/L] | Equivalence | | |
| Test Example 1 | 5 | 1 | 100 | 2.7 | 60 | 0.7 |
| Test Example 2 | 5 | 1 | 100 | 2.7 | 60 | 0.6 |
| Test Example 3 | 5 | 1 | 100 | 2.7 | 60 | 0.6 |
| Test Example 4 | 5 | 1 | 100 | 2.7 | 60 | 0.6 |

After the entire amount of the oxalate conversion starting liquid was added into the oxalic acid solution, the stirring state was continuously maintained for 10 minutes. Subsequently, the entire amount of the resultant mixture was filtered for solid-liquid separation, and the crystals of scandium oxalate separated were subjected to repulp washing with pure water in an amount of 50 g/L three times. The average particle diameter of the crystals of scandium oxalate obtained was measured by using a micro-track. The measurement results are presented in the following Table 2.

### (Roasting treatment)

Thereafter, the crystals of scandium oxalate obtained after washing were placed in a furnace and calcined at about 900°C to obtain scandium oxide. The average particle diameter of scandium oxide thus obtained was measured by using a micro-track. The measurement results are presented in the following Table 2.

**[Table 2]**

| | Scandium oxalate [µm] | | | Scandium oxide [µm] | | |
|---|---|---|---|---|---|---|
| | D10 | D50 | D90 | D10 | D50 | D90 |
| Test Example 1 | 8.99 | 33.14 | 72.29 | 7.56 | 18.56 | 32.23 |
| Test Example 2 | 6. 07 | 21.05 | 44.40 | 5.90 | 14.80 | 27.53 |
| Test Example 3 | 6.10 | 21.60 | 46.60 | 6.17 | 15.82 | 29.20 |
| Test Example 4 | 6.80 | 24.06 | 52.59 | 5.96 | 15.39 | 29.00 |

As can be seen from the measurement results on the particle diameter presented in Table 2, the average particle diameter (D90) of scandium oxide generated is a size of 29 µm to 32 µm.

### [Example 2]

A hydrometallurgy process of nickel oxide ore was performed in the same manner as in Example 1 and then an ion exchange treatment and a solvent extraction treatment were performed to obtain a scandium sulfate solution. The scandium concentration of the scandium sulfate solution obtained was adjusted to 10 g/L and the pH thereof was adjusted to 0 with sulfuric acid. This solution was used as an oxalate conversion starting liquid.

Next, the oxalate conversion starting liquid was taken by 1.3 liters per one test condition. In addition, as an oxalic acid solution to be used in the oxalate conversion, a solution containing oxalic acid at a concentration of 100 g/L was prepared by 0.54 liters per one test condition. Note that the amount of this oxalic acid solution corresponds to the amount of oxalic acid added to be 2.7 equivalence of scandium contained in the oxalate conversion starting liquid.

Thereafter, the temperatures of the oxalate conversion starting liquid and the oxalic acid solution were each raised to and maintained at 60°C. In Example 2, the oxalate conversion treatment was performed using these solutions by two methods of a method (Example 2-1) in which the oxalate conversion starting liquid was added into the oxalic acid solution to form an oxalate and a method (Example 2-2) in which the oxalic acid solution was added into the oxalate conversion starting liquid to form an oxalate as presented in the following Table 3. Specifically, in the oxalate conversion treatment of method 1, the oxalate conversion starting liquid was added into the oxalic acid solution contained in the reaction vessel at a flow rate of about 0.5 L/min while stirring the oxalic acid solution. On the other hand, in the oxalate conversion treatment of method 2, the oxalic acid solution was added into the oxalate conversion starting liquid at a flow rate of about 0.5 L/min while stirring the oxalate conversion starting liquid. Note that the temperature of the reaction solution during the treatment was maintained at 60°C.

**[Table 3]**

| | Oxalate conversion starting liquid (Value measured at room temperature) | | Oxalic acid solution | | Temperature [°C] | Retention time [hr] | Method of oxalate conversion |
|---|---|---|---|---|---|---|---|
| | Sc [g/L] | pH | Concentration [g/L] | Equivalence | | | |
| Example 2-1 | 10 | 0 | 100 | 2.7 | 60 | 1.9 | Addition of starting liquid into oxalic acid solution |
| Example 2-2 | 10 | 0 | 100 | 2.7 | 60 | 2.0 | Addition of oxalic acid solution into starting liquid |

In both methods, the stirring state was continuously maintained for 10 minutes after the mixing of the liquids was finished. Subsequently, the entire amount of the resultant mixture was filtered for solid-liquid separation, and the crystals of scandium oxalate separated were subjected to repulp washing with pure water in an amount of 50 g/L three times.

Thereafter, the crystals of scandium oxalate obtained after washing were placed in a furnace and calcined at about 900°C to obtain scandium oxide. The average particle diameter of scandium oxide thus obtained was measured by using a micro-track. The measurement results are presented in the following Table 4.

**[Table 4]**

| | Scandium oxalate [µm] | | | Scandium oxide [µm] | | |
|---|---|---|---|---|---|---|
| | D10 | D50 | D90 | D10 | D50 | D90 |
| Example 2-1 | 5.80 | 17.55 | 35.42 | 5.28 | 12.17 | 26.98 |
| Example 2-2 | 5.72 | 15.55 | 32.04 | 5.26 | 13.22 | 25.15 |

As can be seen from the measurement results on the particle diameter presented in Table 4, the average particle diameter (D90) of scandium oxide generated is a size of 25 µm to 27 µm and it has been confirmed that there is no difference in the particle diameter depending on the method of oxalate conversion treatment.

### [Comparative Example 1]

A hydrometallurgy process of nickel oxide ore was performed in the same manner as in Example 1 and then an ion exchange treatment and a solvent extraction treatment were performed to obtain a scandium sulfate solution. The scandium concentration of the scandium sulfate solution obtained was adjusted to 10 g/L and the pH thereof was adjusted to 0 with sulfuric acid. This solution was used as an oxalate conversion starting liquid.

Next, the oxalate conversion starting liquid was taken by 1.3 liters per one test condition. In addition, as an oxalic acid solution to be used in the oxalate conversion, a solution containing oxalic acid at a concentration of 100 g/L was prepared by 0.54 liters per one test condition. Note that the amount of this oxalic acid solution corresponds to the amount of oxalic acid added to be 2.7 equivalence of scandium contained in the oxalate conversion starting liquid.

Thereafter, in Comparative Example 1, the oxalate conversion starting liquid and the oxalic acid solution were each divided into two portions so that those of which the temperature was maintained at a temperature condition of room temperature (25°C) (Comparative Example 1-1) and those of which the temperature was raised to and maintained at 40°C (Comparative Example 1-2) were prepared. Using these solutions, the oxalate conversion starting liquid was added into the oxalic acid solution contained in the reaction vessel at a flow rate of about 0.5 L/min while stirring the oxalic acid solution. Note that the conditions of the oxalate conversion treatment are summarized in the following Table 5.

**[Table 5]**

| | Oxalate conversion starting liquid (Value measured at room temperature) | | Oxalic acid solution | | Temperature [°C] | Retention time [hr] |
|---|---|---|---|---|---|---|
| | Sc [g/L] | pH | Concentration [g/L] | Equivalence | | |
| Comparative Example 1-1 | 5 | 0 | 100 | 2.7 | 25 | 0.5 |
| Comparative Example 1-2 | 5 | 0 | 100 | 2.7 | 40 | 2.0 |

After the entire amount of the oxalate conversion starting liquid was added into the oxalic acid solution, the stirring state was continuously maintained for 30 minutes to 120 minutes. Subsequently, the entire amount of the resultant mixture was filtered for solid-liquid separation, and the crystals of scandium oxalate separated were subjected to repulp washing with pure water in an amount of 50 g/L three times.

Thereafter, the crystals of scandium oxalate obtained after washing were placed in a furnace and calcined at about 900°C to obtain scandium oxide. The average particle diameter of scandium oxide thus obtained was measured by using a micro-track. The measurement results are presented in the following Table 6.

**[Table 6]**

| | Scandium oxalate [µm] | | | Scandium oxide [µm] | | |
|---|---|---|---|---|---|---|
| | D10 | D50 | D90 | D10 | D50 | D90 |
| Comparative Example 1-1 | 5.54 | 11. 42 | 21. 03 | 4.69 | 7.95 | 12.82 |
| comparative Example 1-2 | 5.57 | 12.32 | 21.52 | 4.31 | 7.81 | 13.29 |

As can be seen from the measurement results on the particle diameter presented in Table 6, only those having an average particle diameter (D90) to be much smaller than that of the scandium oxide obtained in Examples are obtained as scandium oxide generated and it is thus impossible to effectively coarsen the particles of scandium oxide.

## Claims

1. A method for recovering scandium, comprising:
a step for carrying out an oxalate conversion treatment in which oxalic acid is used in a solution containing scandium (scandium-containing solution) to cause a reaction in which the scandium is converted into an oxalate form, wherein
a temperature of a reaction solution during the treatment is set to 50°C or more and 80°C or less upon the oxalate conversion treatment.

2. The method for recovering scandium according to claim 1, wherein scandium oxalate is obtained by the oxalate conversion treatment and the scandium oxalate is roasted to generate scandium oxide.

3. The method for recovering scandium according to claim 1 or 2, wherein an oxalic acid solution having a temperature adjusted to 50°C or more and 80°C or less is used as the oxalic acid.

4. The method for recovering scandium according to any one of claims 1 to 3, wherein the scandium-containing solution is obtained by subjecting a solution containing scandium to an ion exchange treatment and/or a solvent extraction treatment.
